Europäisches Patentamt

European Patent Office

Office européen des brevets

(11) Publication number: 0 349 032
A2

# EUROPEAN PATENT APPLICATION

(21) Application number: 89201547.0

(22) Date of filing: 15.06.89

(51) Int. Cl.⁴: C08G 61/02 , D01F 6/00

(30) Priority: 15.06.88 NL 8801524

(43) Date of publication of application:
03.01.90 Bulletin 90/01

(84) Designated Contracting States:
AT BE CH DE ES FR GB GR IT LI LU NL SE

(71) Applicant: UNION CARBIDE CORPORATION
39 Old Ridgebury Road
Danbury Connecticut 06817(US)

(72) Inventor: Van der Werff, Harm
It Jacht 16
NL-8501 RT Joure(NL)
Inventor: Pennings, Albert Jan
Ettenlaan 3
NL-9331 BE Norg(NL)

(74) Representative: Smulders, Theodorus A.H.J.,
Ir. et al
Vereenigde Octrooibureaux Nieuwe Parklaan
107
NL-2587 BP 's-Gravenhage(NL)

(54) A process for making polymeric products of high tensile strength.

(57) The invention relates to a process for making polymeric products of high tensile strength, and to the products obtained. By means of vapour deposition polymerization, a chemically non-crosslinked polymeric material having a theoretical tensile strength at break of at least 10 GPa, preferably at least 15 or even at least 20 GPa, is formed. Said polymeric material is then drawn under essentially oxygen-free conditions to a draw ratio above 10, preferably at least 20 or even at least 30 or 40. The polymeric material preferably is a poly(para-xylylene) or poly-p,p'-dimethylenebiphenyl polymer having a weight average molecular weight of $10^4$-$10^7$. The drawing step is preferably performed at a temperature in a condis phase of the polymer.

FIG·1

# A process for making polymeric products of high tensile strength

This invention relates to a process for making polymeric products of high tensile strength.

For a long time, extensive research has been done to realize polymeric products, such as polymeric fibers, having an extremely high tensile strength and/or an extremely high modulus. The research directed to the realization of these properties has been focussed in particular on two different classes of polymers, i.e., polymers having a highly flexible chain, such as polyethylene, and polymers having a rigid chain, such as poly(p-phenyleneterephtalamide).

It has been achieved to obtain fibers having very good mechanical properties by gel spinning followed by hot drawing polyethylene having a very high molecular weight (approximately $10^6$): see, for example, Smook et al., Polym.Bull.2 (1980) 775. Fibers having a tensile strength at break of more than 4 GPa (giga Pascal) have been made by using highly dilute solutions of high molecular polyethylene, which promotes the production of a gel spun fiber having fewer topological defects and hence better tensile strength properties. For that matter, naturally a limited number of molecular entanglements should be present to obtain a drawable network.

However, these polyethylene-based fibers also have a number of disadvantages or shortcomings. A major disadvantage resides in the method of manufacture, which comprises gel spinning a solution of polyethylene. The need to use a solvent implies a separate cost item for the solvent, the recovery thereof and the protection of the environment against the solvent.
A further major drawback of polyethylene fibers is that they have a melting point as low as about 140°C, and accordingly can only be used at relatively low temperatures, such as in the neighbourhood of room temperature.

Of the rigid-chain polymers, poly-(paraphenyleneterephtalamide), referred to herein as PPTA, has received the greatest attention. This polymer exhibits a lyotropic behaviour and fibers of good tensile strengh properties can be obtained by spinning from a nematic, highly concentrated solution of low-molecular PPTA in sulfuric acid: see US-A-3 671 542. Lattice defects in such fibers will substantially be the result of chain ends. By reason of the presence of strong hydrogen bridges between adjacent chains in the crystal lattice, the fibers cannot be drawn. Nevertheless, they have a very high tensile strength at break of about 3 to 4 GPa.

Although, compared to polyethylene fibers, these PPTA fibers have the important advantage of higher service temperatures, they also have disadvantages. The need of using a solution in sulfuric acid in the manufacture is, by itself, a major disadvantage. Moreover, the fibers have the disadvantage of an extremely high rigidity (the Young's modulus is in the order of 250), so that they break at a lower elongation.

The present invention provides a process for making polymeric products of high tensile strength, which avoids the above disadvantages and is characterized by forming a chemically non-cross-linked polymeric material with a theoretical tensile strength at break of at least 10 GPa by vapour deposition polymerization, and drawing this material in essentially oxygen-free conditions to a draw ratio above 10.

A preferred material to enable the production of polymeric products, such as films, solid fibers, hollow fibers, yarns or ribbons having an ultra high tensile strength, is a polymeric material formed by vapour deposition polymerization and having a high theoretical tensile strength at break, such as a theoretical tensile strength at break of at least 15, preferably at least 20 GPa.

A preferred embodiment of the process according to the invention is characterized in that the polymeric material formed by vapour deposition polymerization is a homopolymer or copolymer containing units having the formulae Ia and/or IIa, in which the benzene rings may be substituted by one or more halogen atoms, $C_{1-6}$ alkyl groups, $C_{2-7}$ alkanoyl groups, $C_{2-7}$ alkanoyloxy groups and/or cyano groups.

Such a polymeric material is formed by vapour deposition polymerization of diradicals having the formulae Ib and/or IIb, in which the benzene rings may be substituted by or more halogen atoms, $C_{1-6}$ alkyl groups, $C_{2-7}$ alkanoyl groups, $C_{2-7}$ alkanoyloxy groups and/or cyano groups.

Such a vapour containing diradicals can be obtained by the pyrolysis of a suitable starting material. Although the starting material may consist of monomeric, trimeric or multimeric compounds, it is preferred that the vapour is obtained by the pyrolysis of dimers having the formulae Ic and/or IIc, in which the benzene rings may be substituted by one or more halogen atoms, $C_{1-6}$ alkyl groups, $C_{2-7}$ alkanoyl groups, $C_{2-7}$ alkanoyloxy groups and/or cyano groups. Thanks to a relatively low pyrolysis temperature of about 500-700°C, such dimers are excellently suitable to virtually exclude contamination of the final polymeric product with low-molecular by-products.

The preferred polymers according to the invention have a semi-rigid chain. They are known per se. For example, Szwarc, Discussions Faraday Soc. 2 (1947) 48, has described the polymer poly-(para-xylylene), referred to herein as PPX, which was obtained by the condensation polymerization of vaporous biradicals formed by the pyrolysis of paraxylene. Gorham, J.Polym.Sci.4, Vol A-1 (1966) 3027 has subsequently proposed to obtain the vapour by the pyrolysis of the cyclic dimer, designated as di-para-xylylene or para-cyclophane (also see Szwarc in Polymer Engineering and Science, 16 (1976) 473). Gorham's method makes it possible to produce a high-purity, high-molecular polymer, also in the case of substituted poly-p-xylylene, by subjecting dimers substituted in the benzene ring to the pyrolysis reaction. Naturally, the substituents must be resistant to the pyrolysis temperature, which requirement is satisfied by halogen atoms (chlorine, bromine, iodine and fluorine), alkyl groups, cyano groups, acyl groups and acyloxy groups.

Gorham's method can also be used for the production of poly-p,p'-dimethylenebiphenyl as described by Starke et al., Plaste und Kautschuk 32 (1985) 294. In that case the starting product is the dimer [2,2] (4,4') biphenylophane, or, if substituted polymers are desired, a corresponding substituted dimer.

The cyclic dimers can be prepared in various ways. One method of preparation consists in the pyrolysis of the monomer, e.g., p-xylene, at 950°C in the presence of steam. In it, the dimer is obtained in a yield of about 15%, with an efficiency of 60%. The dimer can be separated from the reaction mixture by quenching with benzene or toluene. See Chem.Eng.News, March 1, 1965, 41-42. Another method of preparation consists in the pyrolysis of dithia[3.3]paracyclophane-S,S-tetroxide, as described by Vögtle et al. in Chem.Ind. 1979, 416-418.

In addition to homopolymers, such as substituted or non-substituted poly-p-xylylene and poly-p,p'-dimethylenebiphenyl, copolymers, both random copolymers and block copolymers are accessible through the Gorham method.

As stated before, such polymers with semi-rigid chains have been known from 1947 and have been extensively investigated since then. In particular, the crystallization taking place during the polymerization, the crystal structure and the thermal behaviour of PPX have been investigated [see Kirkpatrick and Wunderlich, Makromol. Chem. 186 (1985) 2595; Iwamoto and Wunderlich, J.Polym.Sci., Polym. Phys.Ed. 11 (1973) 2403; Kirkpatrick and Wunderlich, J.Polym.Sci., Polym.Phys.Ed. 24 (1986) 931; Kubo and Wunderlich J.Appl.Phys. 42 (1971) 4558; Isoda et al, Polymer 24 (1983) 1155; and Niegisch, J.Appl.Phys. 37 (1966) 4041]. It has been found that semi-crystalline PPX exhibits a glass transition at 13°C and that crystalline PPX melts at 427°C. The PPX was found to have three crystalline polymorphs: an $\alpha$ polymorph at temperatures below 231°C, a $\beta_1$ polymorph at a temperature between 231°C and 287°C, and a $\beta_2$ polymorph at a temperature of between 287°C and the melting point of 427°C. The crystal structures of both the $\alpha$ and the $\beta$ form have been elucidated. Both the $\beta_1$ polymorph and the $\beta_2$ polymorph are assumed to be conformationally disordered (condis) crystals. Especially the higher temperature $\beta_2$ polymorph can be expected to have considerable freedom of movement between the different conformations, which has been confirmed by creep studies.

In spite of the long-standing and extensive knowledge of PPX and analogous polymers, it has not so far been found, however, that, by drawing the polymer, fibers and other manifestations of the polymer with very interesting tensile strength and modulus properties can be realized, provided the drawing operation is carried out under oxygen-free conditions to a draw ratio above 10. Thus already the first experiments have resulted in fibers with a tensile strength at break of 3 GPa, a Young's modulus of 102 GPa and an elongation at break of 3%, obtained with a maximum draw ratio of 43. Further improvements certainly appear possible, when it is taken into account that the theoretical tensile strength at break is 23 GPa (for both the $\alpha$ and the $\beta$ crystal form of PPX); for comparison, for polyethylene the theoretical tensile strength at break is 32.5 GPa. Higher draw ratios and higher tensile strength values will be obtained, for example, by drawing a higher molecular polymer, provided the polymeric material contains a sufficient number of entanglements, which can be controlled by adapting polymerization conditions, such as the condensation temperature and the rate of polymerisation; through simple experimentation the effect of certain adaptations of the polymerization conditions can be determined.

Compared with the prior art processes for making strong polymeric fibers and the like, the process according to this invention has the advantage not only that the fibers produced lack shortcomings of the known strong polyethylene fibers and PPTA fibers, but also that a solvent-free manufacture is possible, which in addition can be carried out as a continuous process. As regards the manifestation of the polymer, the process according to the invention has virtually no limitations: the manifestation of the polymeric material formed by vapour deposition polymerization is determined by the shape of the substrate used, on which the polymerization takes place, and so can be selected as desired. A continuous process can be obtained by using a moving substrate which transports polymer deposited and formed on it in a first space to a second space in which the polymer is removed from the substrate and is passed through a drawing space.

In principle, good tensile strength properties can be obtained by the process according to this invention if a polymer is used which can be prepared by vapour deposition polymerization with a high molecular weight and a high theoretical tensile strength at break of at least 10 GPa, more preferably at least 15 GPa, and most preferably at least 20 GPa. For the calculation of the theoretical tensile strength at break, use has been made of the approach made by De Boer in Trans.Faraday Soc. 32 (1936) 10, assuming that the strength of the polymer is limited by the intrinsic bonding strength of the carbon-to-carbon bond between methylene groups linking the benzene rings. Schaefgen in J.Polym.Sci. 41 (1959) 133 has determined this intrinsic bonding strength, on the basis of a study into thermal decomposition, at 244 kJ/mole. Kelly and MacMillan, Strong solids, third edition, Oxford Science Publications, Clarendon Press, Oxford (1986) pp 7-8, have indicated a value of $5.2 \times 10^2$ $Nm^{-1}$ for the force constant of this carbon-to-carbon bond. From this it can be calculated that a force of $5.1 \times 10^{-9} N$ is required to break the carbon-to-carbon bond. By means of the above approach of De Boer, the theoretical tensile strength at break can be calculated from this, in combination with the unit cell parameters of the crystal structure of the polymer.

The desired high theoretical tensile strength at break is attained both in the case of PPX and in the case of poly-p,p'-dimethylene biphenyl, and can also be achieved with substituted analogues, if suitable substituents are selected. Suitable substituents are halogen atoms (fluorine, chlorine, bromine, iodine), $C_{1-6}$ alkyl groups, $C_{2-7}$ alkanoyl groups, $C_{2-7}$ alkanoyloxy groups and cyano groups.

As regards the molecular weight, the polymeric material formed by vapour deposition polymerization will preferably have a weight average molecular weight of $10^4$-$10^7$, more preferably $10^5$-$10^6$, and most preferably 300.000-800.000 or higher. A higher molecular weight in principle makes it possible to achieve a higher tensile strength by drawing, thanks to a smaller number of chain ends and hence a smaller number of lattice defects.

In the drawing of the polymeric material obtained by vapour deposition polymerization, it is essential that oxygen-free conditions are used. For this purpose, the drawing operation is preferably carried out in an atmosphere of an inert gas, such as nitrogen or a noble gas. Furthermore, it is essential that the material is drawn to a draw ratio above 10. The draw ratio is preferably selected as high as possible. Preferably, the material is drawn to a draw ratio of at least 20, more preferably at least 30, and most preferably at least 40. Higher values of the draw ratio promote the strength characteristics of the polymeric product.

Furthermore, it is most preferable that, during the drawing operation, a temperature is used in the range of a condis crystal condition of the polymer. For PPX, therefore, the drawing temperature should be between 231°C and 427°C (the melting point). Preferably, however, the draw temperature is between 287°C and 427°C, because the considerable freedom of movement of the polymer chains in the $\beta_2$ condis phase promotes a further decrease of the crystal defects, which are small in number as it is, in the polymeric material obtained by vapour deposition polymerization. It should be taken into account, for that matter, that PPX is already subject to thermal degradation just above the melting point, so that it is likely that there is a danger of degradation also during drawing just below the melting point.

The high-strength polymeric products to be made by the process according to the invention may have various forms, such as films, solid fibers, hollow fibers, yarns and ribbons. Films can be obtained, for example, by drawing polymeric films formed by vapour deposition polymerization. Also, polymer films formed by vapour deposition polymerization can be drawn to form so-called split fibers and other fiber or ribbon-shaped products by suitable cutting means.

The strong polymeric fibers and the like that can be produced by the present process are suitable for a wide range of uses, in particular those in which their relatively high tensile strength in relation to their relatively low specific density is advantageous, such as in structural materials for the airplane, shipping and automobile industries.

In addition to being suitable as a final product, the strong polymeric fibers produced by the process according to the invention are also suitable for use as starting material for the production of carbon fibers similar, for example, to polyphenylene, polyethylene and polyamide (Kevlar) fibers proposed for use for these purposes.

The invention is illustrated in and by the following example.

Example

For drawing experiments, we used a commercial PPX film (Parylene N, molecular weight 500,000, a proprietary product of Union Carbide Corporation) 35 μm thick. The film had been made by the Gorham method as described in Chem.Eng.News, March 1, 1965, 41-42.

From the film, ribbons of 2.0x30.0 mm were cut. These ribbons were clamped at both ends in aluminum clips attached to wires. By this means the ribbons were passed through a glass tube, in which a nitrogen atmosphere was maintained, into a tubular oven at a rate of 25 mm/min. In some experiments, the oven was kept at a temperature of 420°C, in other experiments at a temperature of 390°C.

The ribbons were drawn by increasing the speed of the wind-up drum, whereas the speed of the wind-off drum remained unchanged.

After drawing, the ribbons were cut into fibers 45 mm long. The draw ratios and cross-sectional areas of the fibers were calculated from weight and length. The density was taken to be the theoretical density of the $\beta$ form (1158 kg/m$^3$), as the $\alpha \rightarrow \beta$ transition is irreversible, unless the product has been annealed in the $\beta_2$ phase region for a long period of time.

Tensile strength tests were carried out at 20°C, using samples with a clamped length of 15 mm, and using an Instron 4301 tensile tester at a cross-head speed of 7.2 mm/min.

The non-drawn polymer films consisted of folded chain crystals of the $\alpha$ form. These "lamellar" crystals are preferentially oriented with the (010) plane parallel to the film surface. The mechanical properties are rather moderate: a tensile strength at break of 40 MPa (mega Pascal) and a Young's modulus of 3.2 GPa. In a typical stress-strain curve for this material, stress increases up to a strain of 2%, and then abruptly levels off. Breakage occurs at 6.5% strain.

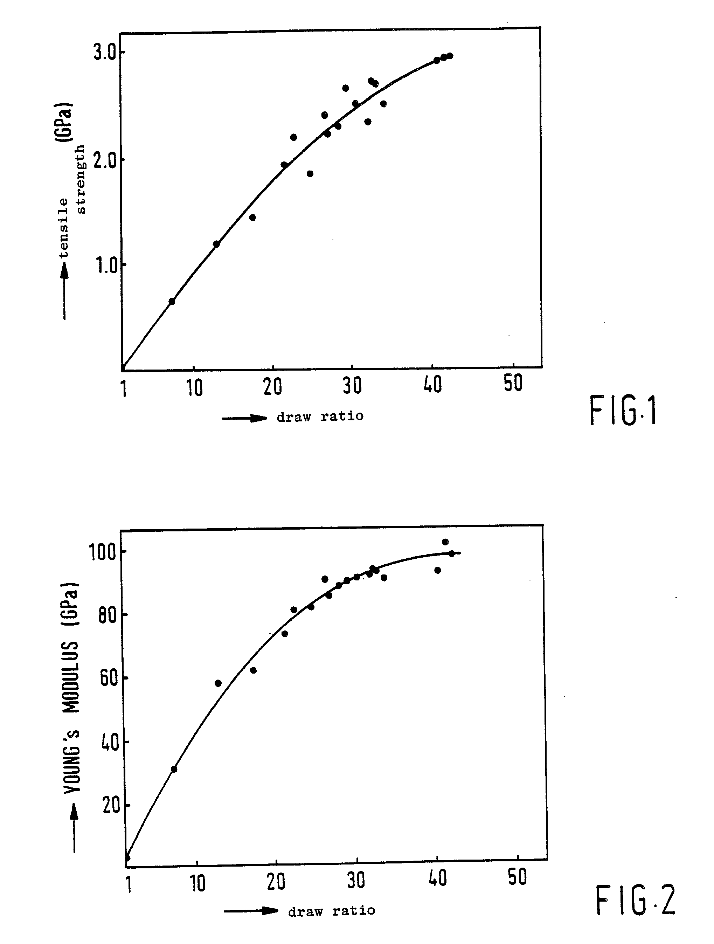

Totally different were the mechanical properties of fibers obtained from the PPX films by drawing at 420°C, i.e., just below the melting point. Figs. 1 and 2 show the relationship between tensile strength at break and draw ratio, and the relationship between the Young's modulus and the draw ratio. The figures show a clear increase of both tensile strength at break and Young's modulus with increasing draw ratios. The maximum draw ratio was found to be 43 and the maximum values of the mechanical properties that could be obtained were a tensile strength at break of 3.0 GPa, a Young's modulus of 102 GPa and an elongation at break of 3%. Fig. 3 shows a typical stress-strain curve for such a fiber.

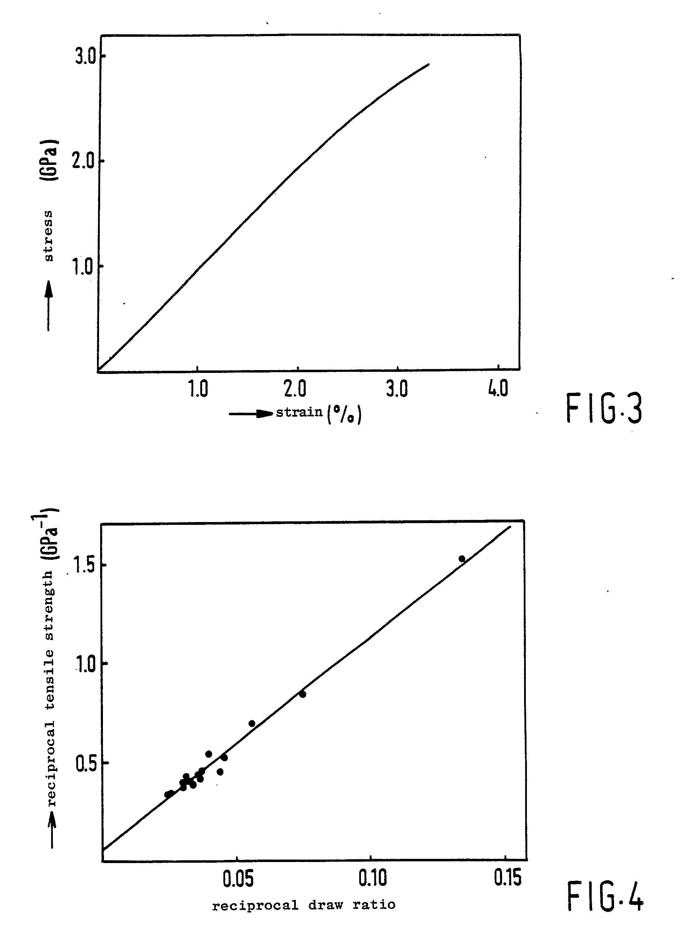

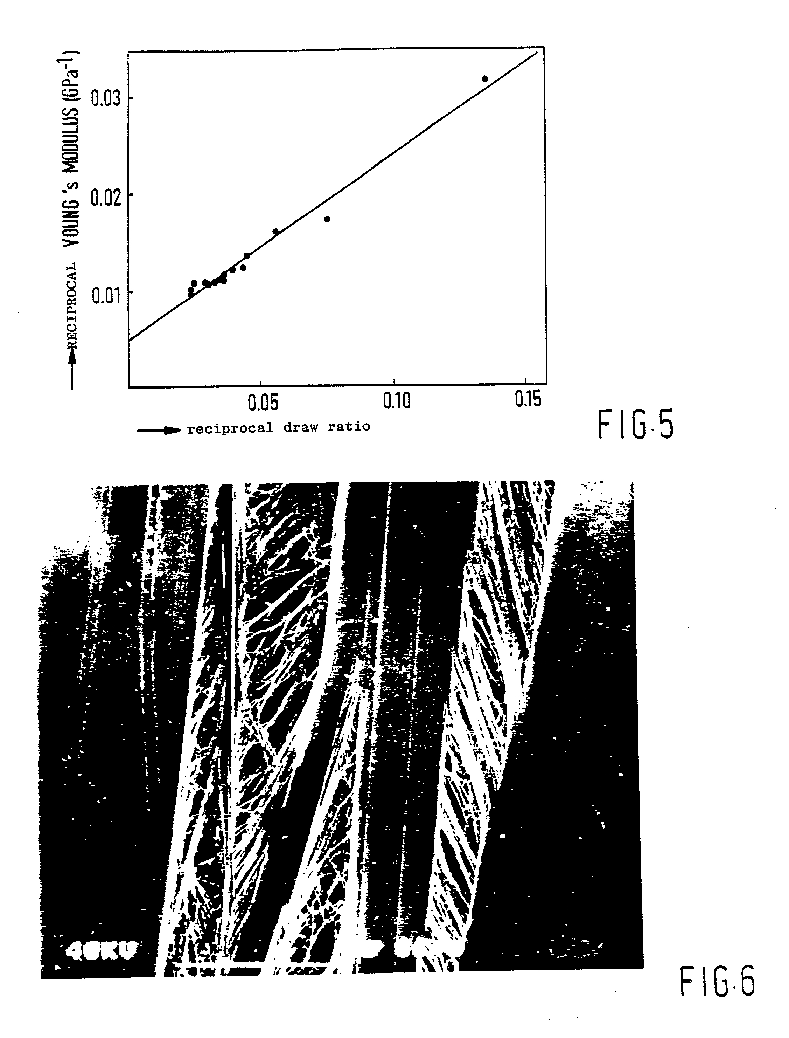

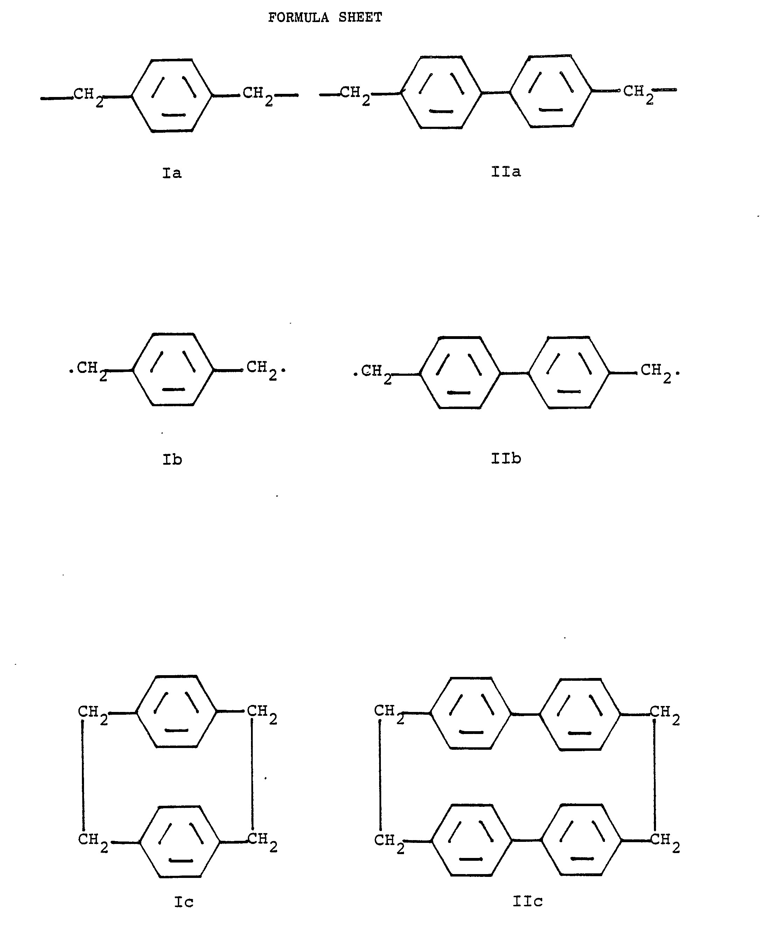

In Fig. 4 and Fig. 5, the reciprocal tensile strength at break and the reciprocal Young's modulus have been plotted against the reciprocal draw ratio in order that an estimate may be made of the ultimate mechanical properties of PPX fibers drawn at 420°C. By extrapolation to an infinite draw ratio, i.e., a reciprocal draw ratio of zero, an ultimate tensile strength at break of 16.4 GPa and an ultimate Young's modulus of 208 GPa were found. The extrapolated value of the tensile strength at break is fairly consistent with the theoretical value of 23 GPa. The fact that a maximum tensile strength at break of 3.0 GPa was measured for the drawn fibers can be attributed to the still relatively low molecular weight of the polymer (500,000) and to stress-induced degradation of the material at 420°C.

During drawing, orientation occurs, with the c axis being oriented in the fiber direction. As, in the non-drawn PPX film, the molecules are already oriented with the b axis perpendicular to the film surface, the drawn fibers accordingly exhibit double orientation.

A drawn fiber exhibits a smooth surface, but generally has many narrow cracks of varying length in the longitudinal direction of the fiber. After tensile testing to breakage of a drawn fiber, some of the cracks are found to be widened perpendicular to the fiber direction and reveal the fibrillar nature of the drawn material: see Fig. 6, which shows a SEM micrograph of a fiber obtained by drawing at 390°C with a draw ratio of 43, after being tested for tensile properties. Upon breaking, the drawn fiber usually splits up, which indicates that the process of failure starts in such longitudinal cracks.

## Claims

1. A process for the manufacture of polymeric products having a high tensile strength, characterized by forming a chemically non-cross-linked polymeric material with a theoretical tensile strength at break of at least 10 GPa by vapour deposition polymerization, and drawing this material to a draw ratio above 10 in essentially oxygen-free conditions.

2. A process as claimed in claim 1, characterized in that the polymeric material formed by vapour deposition polymerization has a theoretical tensile strength at break of at least 15, preferably at least 20 GPa.

3. A process as claimed in claim 1, characterized in that the polymeric material formed by vapour deposition polymerization consists of a homopolymer or copolymer containing units having the formulae Ia and/or IIa, in which the benzene rings may be substituted by one or more halogen atoms, $C_{1-6}$ alkyl groups, $C_{2-7}$ alkanoyl groups, $C_{2-7}$ alkanoyloxy groups and/or cyano groups.

4. A process as claimed in claim 1, characterized in that the polymeric material is formed by vapour deposition polymerization of biradicals having formulae Ib and/or IIb, wherein the benzene rings may be substituted by one or more halogen atoms, $C_{1-6}$ alkyl groups, $C_{2-7}$ alkanoyl groups, $C_{2-7}$ alkanoyloxy groups and/or cyano groups.

5. A process as claimed in claim 3 or 4, characterized in that the vapour is obtained by the pyrolysis of dimers having the formulae Ic and/or IIc, wherein the benzene rings may be substituted by one or more halogen atoms, $C_{1-6}$ alkyl groups, $C_{2-7}$ alkanoyl groups, $C_{2-7}$ alkanoyloxy groups and/or cyano groups.

6. A process as claimed in any of claims 1-5, characterized in that the material formed by vapour deposition polymerization consists of a polymer having a weight average molecular weight of $10^4$-$10^7$, preferably $10^5$-$10^6$, and most preferably 300,000-800,000.

7. A process as claimed in any of claims 1-6, characterized in that the polymeric material is drawn to a draw ratio of at least 20, preferably at least 30, and most preferably at least 40.

8. A process as claimed in any of claims 1-7, characterized in that the polymeric material is drawn in an inert gas atmosphere, such as nitrogen or noble gas.

9. A process as claimed in any of claims 1-8, characterized in that the polymeric material is drawn at a temperature in the region of condis crystal condition of the polymer.

10. A process as claimed in claim 9, characterized in that the polymeric materisal consists of poly(paraxylylene) and is drawn at a temperature of between 231°C and the melting point of the polymer, preferably between 287°C and the melting point.

11. Polymeric products, preferably in the form of films, solid fibers, hollow fibers, yarns or ribbons, produced using the process as claimed in any of claims 1-10.

FIG·1

FIG·2

FIG·3

FIG·4

FIG·5

FIG·6

FORMULA SHEET

Ia

IIa

Ib

IIb

Ic

IIc